# EUROPÄISCHE PATENTSCHRIFT

(11) **EP 2 535 317 B1**
(45) Veröffentlichungstag und Bekanntmachung des Hinweises auf die Patenterteilung: **24.09.2014**
(21) Anmeldenummer: 11170295.7
(22) Anmeldetag: 17.06.2011
(51) Int. Cl.: C02F 3/00, C02F 3/12, C02F 3/22, F16K 31/08, F16K 31/20

(54) **Biologische Klärvorrichtung**
Biological clarifying device
Dispositif de clarification biologique

(43) Veröffentlichungstag der Anmeldung: 19.12.2012
(73) Patentinhaber: ATB Umwelttechnologien GmbH, 32457 Porta Westfalica (DE)
(72) Erfinder: Zelmer, Torsten, 31749 Auetal (DE); Vogt, Torsten, 31710 Buchholz (DE)
(74) Vertreter: Ter Meer Steinmeister & Partner

(56) Entgegenhaltungen:
- DE-A1-102008 033 293
- US-A1- 2002 139 739

## Beschreibung

Die vorliegende Erfindung betrifft eine biologische Klärvorrichtung, mit einer Klärkammer und Einrichtungen zur Beförderung und Behandlung von Abwasser gemäß dem Oberbegriff des Anspruchs 1, sowie ein Verfahren zum Betrieb einer biologischen Klärvorrichtung.

Dokumente DE 10 2008 033 293 A1, welches die Merkmale des Oberbegriffs des Anspruchs 1 zeigt, offenbart eine derartige biologische Klärvorrichtung.

Derartige Klärvorrichtungen werden beispielsweise zur Abwassereinigung für Haushalte eingesetzt, die nicht an das öffentliche Kanalnetz angeschlossen sind. Sie umfassen eine Klärkammer, in der eine biologische Endreinigung des Abwassers mittels Klärschlamm stattfindet. Eine Vorklärung des Abwassers kann in entsprechenden Vorklärkammern stattfinden, in denen Grobstoffe abgeschieden werden. In einer bekannten Bauform sind Vorklärkammer und biologische Klärkammer in einem gemeinsamen Behälter angeordnet und durch eine Trennwand getrennt, über welche die Klärkammer aus der Vorklärkammer beschickt wird.

Solche Klärvorrichtungen sind mit diversen Einrichtungen zur Beförderung und Behandlung von Abwasser ausgestattet. Insbesondere umfassen diese einen Belüfter zur Durchlüftung des Inhalts der biologischen Klärkammer und einen Druckluftheber mit einem Steigrohr, das in seinem unteren Bereich einen Druckluftanschluss aufweist. Sowohl der Belüfter als auch das Steigrohr können mit Druckluft aus einer entsprechenden Druckluftquelle wie etwa einem Verdichter beaufschlagt werden. Das Flüssigkeitsvolumen im Steigrohr wird durch die Druckluft nach oben befördert.

Der Druckluftheber dient in einigen Ausführungsformen als Schlammheber, durch welchen überschüssiger Schlamm aus der Klärkammer über die Trennwand zurück in die Vorklärung befördert wird, wie es beispielsweise in der europäischen Patentanmeldung EP 2 098 487 A1 der Anmelderin beschrieben wird. Alternativ kann ein Druckluftheber zur Abförderung des Klarwassers verwendet werden, das bei der biologischen Klärung anfällt.

Das obere Ende dieses Klarwasserhebers führt in diesem Fall zu einem Klarwasserauslass. Die Verteilung der Druckluft zwischen dem Belüfter und dem Druckluftheber erfolgt über eine sich verzweigende Druckluftleitung, von welcher eine erste Zweigleitung zum Druckanschluss des Drucklufthebers führt und eine zweite Zweigleitung in den Behälter mündet.

Zum Einsatz kommen hauptsächlich zwei bekannte Verfahrenstypen, nämlich das SBR-Verfahren und verschiedene Belebungsverfahren im Durchlaufbetrieb. Diese sind z.B. Wirbelschwebebett-, Festbett-, oder das CBR-Verfahren.

Das meist eingesetzte Verfahren ist das SBR-Verfahren. Bei diesem Verfahren sind zwei voneinander hydraulisch getrennte Behälterteile notwendig. Im ersten Behälterteil, der Vorklärung/Schlammspeicher wird das zufließende Abwasser gepuffert wobei sich Grobstoffe abscheiden. Im zweiten Behälterteil findet die biologische Klärung durch Einbringen von Luftsauerstoff statt. Da die Behälterteile voneinander getrennt sind, sind bei diesem Verfahren mehrere Pumpvorgänge notwendig. Das vorgereinigte Abwasser wird von der Vorklärung über die Trennwand in das Belebungsbecken gefördert. Weiterhin muss überschüssiger Belebtschlamm aus dem Belebungsbecken zurück in die Vorklärung/Schlammspeicher überführt werden. Als dritten Pumpvorgang wird das gereinigte Abwasser nach einer Absetzphase aus dem Belebungsbecken aus der Anlage gefördert. Für diese Fördervorgänge werden diverse Fördereinrichtungen benötigt, die wiederum einen großen steuerungstechnischen Aufwand zur Ansteuerung benötigen. Bei Anlagen die Pumpvorgänge mit Druckluft durchführen müssen mehrere Luftschläuche von der Steuerung zum Behälter gelegt werden, was einen großen Aufwand bei der Installation der Anlage erfordert. Weiterhin zieht dieses durch die Vielzahl der eingesetzten technischen Teile eine erhöhte Störanfälligkeit und Wartungsaufwand nach sich. Ein weiterer Nachteil der dieses Verfahrens ist, dass durch die nicht kontinuierliche Abführung des geklärten Abwassers ein Teil des Behältervolumens als Puffer vorgehalten werden muss und nicht als Schlammspeicher- oder Reaktorvolumen zur Verfügung steht.

Bei den Durchlauf-Belebungsverfahren werden deutlich weniger technische Bauteile eingesetzt. Es wird in der Regel lediglich eine Fördervorrichtung zur Rückführung von Überschussschlamm benötigt. Nachteilig bei diesen Verfahren ist, dass zur Abscheidung des Belebtschlamms vom geklärten Abwasser eine separate Abscheidevorrichtung/Nachklärung vorhanden sein muss. Dieses kann ein dem Belebungsbecken nachgeschalteter Behälterteil sein, wodurch in der Regel ein deutlich größeres Gesamtvolumen der Anlage vorhanden sein muss. Um bei Belastungsspitzen Schlammabtrieb aus der Anlage zu vermeiden, setzt der Großteil der Hersteller dieser Anlagentypen im Belebungsbecken ein Aufwuchsmaterial für die Mikroorganismen ein, das einen besseren Rückhalt dieser in der Anlage bewirkt. Beim CBR-Verfahren wird der Rückhalt durch eine Ablaufdrossel bewirkt, die die Auftriebsgeschwindigkeit in der eingesetzten Nachklärung stark reduziert. Diese eingesetzten Bauteile wie das Aufwuchsmaterial oder die separate Nachklärung bedeuten einen großen Kosten- und bautechnischen Aufwand.

Aufgabe der vorliegenden Erfindung ist es daher, eine neuartige biologische Klärvorrichtung sowie ein Verfahren zu deren Betrieb zu schaffen, die die Vorteile der bekannten Anlagen verbindet, die im SBR- oder im Durchlaufverfahren betrieben werden. Insbesondere soll ein größeres Volumen im Behälter als Reaktorvolumen zur Verfügung gestellt werden, während gleichzeitig auf aufwändige Drosselung- und Sedimentationsvorrichtungen verzichtet werden kann.

Diese Aufgaben werden erfindungsgemäß durch eine biologische Klärvorrichtung mit den Merkmalen des Anspruchs 1 erfüllt, sowie durch ein Verfahren zum Betrieb einer Klärvorrichtung gemäß Anspruch 13.

Die erfindungsgemäße biologische Klärvorrichtung ist so ausgerüstet, dass die Druckluft in Abhängigkeit vom Flüssigkeitspegel in der biologischen Klärkammer auf den Belüfter oder auf den Druckluftheber zum Abfördern von Klarwasser verteilt werden kann. Solange der Pegel niedrig steht, bleibt die zum Druckluftheber führende erste Zweigleitung blockiert, und es wird ausschließlich der Belüfter mit Druckluft versorgt, so dass der Klärkammerinhalt intermittierend belüftet werden kann. Steigt der Pegel über einen vorbestimmten Stand, wird automatisch die zum Druckluftheber führende Zweigleitung geöffnet und das Steigrohr wird mit Druckluft beaufschlagt, so dass sein Inhalt in Richtung des Klarwasserauslasses nach oben abgefördert wird.

Mit dem Öffnen der ersten Zweigleitung zum Druckluftheber und/oder mit dem Beginn der Abförderung von Flüssigkeit aus dem Steigrohr ist die Auslösung eines elektrischen Schalters verbunden, der dazu angeordnet ist, die Druckluftbeaufschlagung des Hebers oder die Flüssigkeitsabförderung zu registrieren und einen Schaltimpuls auszulösen, der den Betriebsmodus der Druckluftquelle umschaltet. Die Druckluftquelle kann dann den intermittierenden Betrieb beenden und eine neue Betriebsphase einleiten, die das kontinuierliche Abfördern von Klarwasser beinhaltet.

Zur automatischen Änderung der Druckluftverteilung zwischen Druckluftheber und Belüfter dient ein Schwimmventil, dass einen Hohlkörper umfasst, der in Abhängigkeit vom Flüssigkeitspegel kippbar in der Klärkammer angeordnet ist. Der Eingang des Hohlkörpers ist an die Druckluftquelle angeschlossen. Im Hohlkörper ist ein Ventilkörper beweglich gelagert, der in einer ersten Schaltstellung das Schwimmventil geöffnet hält und in einer zweiten Schaltstellung die erste Zweigleitung verschließt. Wird der vorbestimmte Flüssigkeitspegel in der Klärkammer überschritten, erreicht der Hohlkörper eine Neigung, bei der der Ventilkörper sich selbsttätig aus der zweiten Schaltstellung in die erste Schaltstellung bewegen kann, so dass die Druckluft praktisch ausschließlich dem Druckluftheber zugefiihrt wird.

Ist der Belüfter beispielsweise auf dem Behälterboden angeordnet und der Anschluss des Drucklufthebers auf einem entsprechend höheren Niveau darüber, gelangt bei nach beiden Seiten geöffnetem Weg die Luft ausschließlich in den Druckluftheber, da an diesem Anschluss aufgrund der geringeren Wassersäule die Luft einen geringeren Gegendruck überwinden muss als am tiefer gelegenen Anschluss der Belüfters. So reicht es aus, lediglich die Leitung zum Druckluftheber mit einer Ventileinrichtung zu versehen, um im Klärbetrieb beide Funktionen durchzuführen.

Das vorstehend beschriebene Schwimmventil stellt ein besonders einfaches Mittel zum Umschalten der Druckluftverteilung dar. Magnetventile mit entsprechenden Ansteuerungen sind in diesem Fall nicht mehr notwendig.

Die erfindungsgemäße Klärvorrichtung verbindet die Vorteile des SBR-Verfahrens mit denjenigen eines Durchlaufverfahren durch den Einsatz entsprechender Steuerungsvorrichtungen zur Steuerung von Behandlungs-, Absetz- und Klarwasserabzugsphasen. Während dieser Phasen kann stets frisches Abwasser zufließen und sich auf den gesamten Behälter verteilen, entweder durch eine hydraulische Verbindung der Vorklärung und der Klärkammer oder durch Zuführung in die biologische Klärkammer als einzigem Behandlungsbecken unter Verzicht auf eine Vorklärung. Somit kann für zufließendes Abwasser die gesamte Oberfläche des Behälters als Aufstaufläche zur Verfügung gestellt werden, und die Höhe des Puffers sehr gering gehalten werden. Dadurch steht mehr Behältervolumen als Reaktor- bzw. Schlammspeichervolumen zur Verfügung. Auf aufwändige Sedimentationsvorrichtungen kann verzichtet werden.

Gemäß einer bevorzugten Ausführungsform der vorliegenden Erfindung ist das Schwimmventil innerhalb der ersten Zweigleitung angeordnet, von welcher ein stromaufwärts gelegenes flexibles erstes Teilstück in den Eingang des Hohlkörpers mündet, während der Hohlkörper lediglich einen Ausgang umfasst, an welchem ein stromabwärts gelegenes zweites Teilstück der ersten Zweigleitung angeschlossen ist, das zum Druckluftheber führt.

In diesem Fall befindet sich das Schwimmventil also zwischen einem ersten und einem zweiten Teilstück der Zweigleitung und kann diese auf die oben beschriebene Weise absperren, so dass die Druckluftzufuhr zum Druckluftheber unterbrochen wird. Die Flexibilität des ersten stromaufwärts gelegenen Teilstücks gestattet es, das Schwimmventil beweglich schwimmend in der Klärkammer zu lagern, so dass es die Kippbewegungen zum Umschalten des Ventils ungehindert ausführen kann.

Vorzugweise ist der Hohlkörper des Schwimmventils als Röhre ausgebildet, deren Enden den Eingang und den Ausgang des Hohlkörpers bilden, und das Eingangsende der Röhre ist mit der Kippachse verbunden.

In dieser Röhre kann beispielsweise ein Ventilkörper in Form einer Kugel frei zwischen den Enden hin und her rollen. Damit das Schwimmventil eindeutige Schaltzustände annimmt und an einem kritischen Pegel nicht ständig zwischen zwei Schaltzuständen oszilliert, kann die Röhre einen Knick aufweisen, der durch die Kugel auf ihrem Weg zwischen den Röhrenenden überwunden werden muss. Es sind jedoch noch andere Ausführungsformen denkbar. Die Röhre des Hohlkörpers kann selbst einen Schwimmkörper bilden, der genügend Auftrieb erzeugt, um zusammen mit der darin enthaltenen Kugel an der Wasseroberfläche zu schwimmen, oder am Hohlkörper können zusätzliche Schwimmkörper angebracht sein, die den Auftrieb erzeugen.

Weiter vorzugsweise ist der Ventilkörper eine Kugel aus magnetischem Material, und die Röhre weist an ihrem Eingangsende einen Anschlag auf, an dem die Kugel magnetisch haften kann.

Gemäß einer weiteren bevorzugten Ausführungsform mündet das obere Ende des Steigrohrs in eine Ablaufleitung, die zum Klarwasserauslass führt, und in dieser Ablaufleitung ist ein Pufferbehälter mit zwei Auslässen integriert, von denen ein höher gelegener Auslass zum Klarwasserauslass führt und ein tiefer gelegener Auslass einen kleineren freien Strömungsquerschnitt aufweist als der höher gelegene Auslass.

Dieser Pufferbehälter kann beim Beginn der Abförderung von Flüssigkeit aus dem Steigrohr zunächst ein gewisses Flüssigkeitsvolumen zurückhalten, bevor Flüssigkeit zum Klarwasserauslass gelangt. Dies ist beispielsweise nützlich, um Schlamm zurückzuhalten, der sich im Steigrohr angesammelt hat und beim Einsetzen der Abförderung zuerst aus dem oberen Steigrohrende gelangt. Dieser Schlamm kann dann über den tiefer gelegenen Auslass des Pufferbehälters entweder zurück in die biologische Klärkammer oder in eine ggfs. vorhandene Vorklärkammer zurück abfließen, bevor die eigentliche Klarwasserabförderung stattfindet. Dem Klarwasserabzug kann daher vorteilhafterweise ein Förderstoß zur Schlammrückführung und/oder zur Heberspülung vorangehen.

Vorzugsweise führt der tiefer gelegene Auslass des Pufferbehälters zurück in die Klärkammer oder zu einer Vorklärkammer, aus der die Klärkammer mit vorgereinigtem Abwasser gespeist wird.

Gemäß einer weiteren bevorzugten Ausführungsform ist der elektrische Schalter in das Schwimmventil integriert und ist durch eine Bewegung des Ventilkörpers beim Kippen des Hohlkörpers in die erste Schaltstellung schließbar. Bei dieser Anordnung wird der elektrische Schalter also unmittelbar beim Öffnen der ersten Zweigleitung zum Druckluftheber ausgelöst, so dass in diesem Moment der Schaltimpuls ausgelöst wird, der den Betrieb der Druckluftquelle umschalten kann, um eine neue Betriebsphase einzuleiten. Der elektrische Schalter kann beispielsweise an einem Anschlag für den Ventilkörper angebracht sein, gegen den der Ventilkörper in der ersten Schaltstellung anschlägt und somit mechanisch den elektrischen Schalter auslöst.

Gemäß einer weiteren bevorzugten Ausführungsform der Erfindung ist der elektrische Schalter in das Steigrohr integriert und ist durch einen Volumenstrom durch das Steigrohr schließbar. In diesem Fall wird der Schaltimpuls also beim Beginn der Abförderung von Flüssigkeit aus dem Steigrohr ausgelöst.

Gemäß einer weiteren bevorzugten Ausführungsform ist der elektrische Schalter in den Pufferbehälter integriert und ist durch Überschreiten einer vorbestimmten Füllhöhe des Pufferbehälters schließbar. In diesem Fall schließt sich der Schalter, sobald ein gewisses Flüssigkeitsvolumen beim Einsetzen des Abförderns aus dem Steigrohr in den Pufferbehälter gelangt ist. Der elektrische Schalter kann so niedrig in den Pufferbehälter angeordnet, dass bereits ein geringes Flüssigkeitsvolumen zum Schließen des Schalters ausreichend ist.

Vorzugsweise ist der elektrische Schalter ein Reed-Schalter, der auf einer Höhe oberhalb des tiefer gelegenen Auslasses angeordnet ist.

Gemäß einer weiteren bevorzugten Ausführungsform der Erfindung ist die Druckluftquelle ein Verdichter, der eine Steuerung zum Betrieb des Verdichters in mindestens zwei verschiedenen Betriebsphasen umfasst, die zeitlich aufeinanderfolgen, nämlich eine erste Betriebsphase, in der der Verdichter intermittierend betrieben wird, gefolgt von einer zweiten Betriebsphase, die zumindest einen Zeitraum eines kontinuierlichen Betriebs des Verdichters umfasst, wobei die Steuerung beim Empfang des Schaltimpulses vom elektrischen Schalter die erste Betriebsphase beendet und die zweite Betriebsphase startet.

Gemäß einer weiteren Ausführungsform ist der elektrische Schalter dazu vorgesehen, beim Schließen der ersten Zweigleitung und/oder beim Aussetzen der Abförderung von Flüssigkeit aus dem oberen Ende des Steigrohrs seinen Schaltzustand zu ändern und einen weiteren Schaltimpuls auszulösen, der die zweite Betriebsphase beendet und erneut eine erste Betriebsphase startet.

Gemäß einem weiteren Aspekt der vorliegenden Erfindung betrifft diese ein Verfahren zum Betrieb einer biologischen Klärvorrichtung mit einer Klärkammer, einem Druckluftheber mit einem Steigrohr, dessen unteres Ende einen Druckluftanschluss aufweist und dessen oberes Ende an einen Klarwasserauslass angeschlossen ist, einem Belüfter und einer Druckluftquelle zur Druckbeaufschlagung des Drucklufthebers über eine erste Zweigleitung und/oder des Belüfters über eine zweite Zweigleitung. Dieses erfindungsgemäße Verfahren ist dadurch gekennzeichnet, dass die Druckluftquelle in einer ersten Betriebsphase intermittierend betrieben wird, während bei einem Flüssigkeitspegel in der Klärkammer unterhalb eines vorbestimmten Pegels die erste Zweigleitung blockiert wird und die zweite Zweigleitung geöffnet bleibt, und, und dass bei Überschreiten dieses Pegels die erste Zweigleitung zur Druckbeaufschlagung des Drucklufthebers freigegeben wird, die Druckluftquelle die erste Betriebsphase beendet und eine zweite Betriebsphase beginnt, die zumindest einen Zeitraum eines kontinuierlichen Betriebs der Druckluftquelle umfasst.

Das neuartige Verfahren, bei dem die erfindungsgemäße Klärvorrichtung zum Einsatz kommt verbindet die Vorteile des SBR-Verfahrens mit denjenigen eines Durchlaufverfahrens. Durch den Einsatz von Behandlungs-, Absetz- und Klarwasserabzugsphasen kann auf aufwendige Sedimentationsvorrichtungen verzichtet werden. Hier ist es möglich, durch eine hydraulische Verbindung der Vorklärung und der Behandlungsbeckens für zufließendes Abwasser die gesamte Oberfläche des Behälters als Aufstaufläche zur Verfügung zu stellen. Da weiterhin auch während der Behandlungs-, Absetz-, und Klarwasserphase sich zufließendes Abwasser auf den gesamten Behälter verteilt, kann die Höhe des Puffers sehr gering gehalten werden. Dadurch steht mehr Behältervolumen als Reaktor- bzw. Schlammspeichervolumen zur Verfügung. Damit hat dieses Verfahren große Vorteile, da kleinere, flachere Behälter eingesetzt werden können, bzw. vorhandene Behälter, die für Anlagen nach dem SBR-Verfahren vom Volumen bzw. der Wassertiefe zu klein sind, nachgerüstet und mit dem neuartigen Verfahren betrieben werden können.

Gemäß einer bevorzugten Ausführungsform dieses Verfahrens beginnt die zweite Betriebsphase mit einem ersten Förderstoß zur Abförderung von Schlamm aus dem Steigrohr des Drucklufthebers.

Vorzugsweise umfasst die zweite Betriebsphase eine Absetzphase vorbestimmter Länge, die dem Zeitraum eines kontinuierlichen Betriebs der Druckluftquelle zeitlich vorgelagert ist. Auf diese Weise wird gewährleistet, dass ausschließlich klares Wasser abgefördert wird, nachdem sich der Klärschlamm in der Absetzphase vollständig am Boden der Klärkammer abgesetzt hat.

Weiter vorzugsweise umfasst die zweite Betriebsphase einen zweiten Spülstoß zur Spülung des Steigrohrs des Drucklufthebers, der der Absetzphase folgt und an welchem sich der Zeitraum eines kontinuierlichen Betriebs der Druckluftquelle anschließt.

Gemäß einem weiteren Aspekt betrifft die vorliegende Erfindung ein Verfahren der vorstehend genannten Art, das zum Betrieb der erfindungsgemäßen biologischen Klärvorrichtung geeignet ist und die Merkmale des Anspruchs 17 umfasst.

Im folgenden wird ein bevorzugtes Ausführungsbeispiel der Erfindung anhand der Zeichnungen näher erläutert.
- Fig. 1: ist eine schematische Darstellung einer Ausführungsform der erfindungsgemäßen biologischen Klärvorrichtung in einem ersten Betriebszustand;
- Fig. 2 und 3: sind Darstellungen eines Schwimmventils, das Bestandteil der biologischen Klärvorrichtung aus Fig. 1 ist, in zwei verschiedenen Schaltzuständen;
- Fig. 4 bis 7: sind weitere Darstellungen der Ausführungsform der biologischen Klärvorrichtung aus Fig. 1 in weiteren Betriebszuständen; und
- Fig. 8: ist ein Ablaufdiagramm, das ein Verfahren zum Betrieb einer erfindungsgemäßen biologischen Klärvorrichtung verdeutlicht.

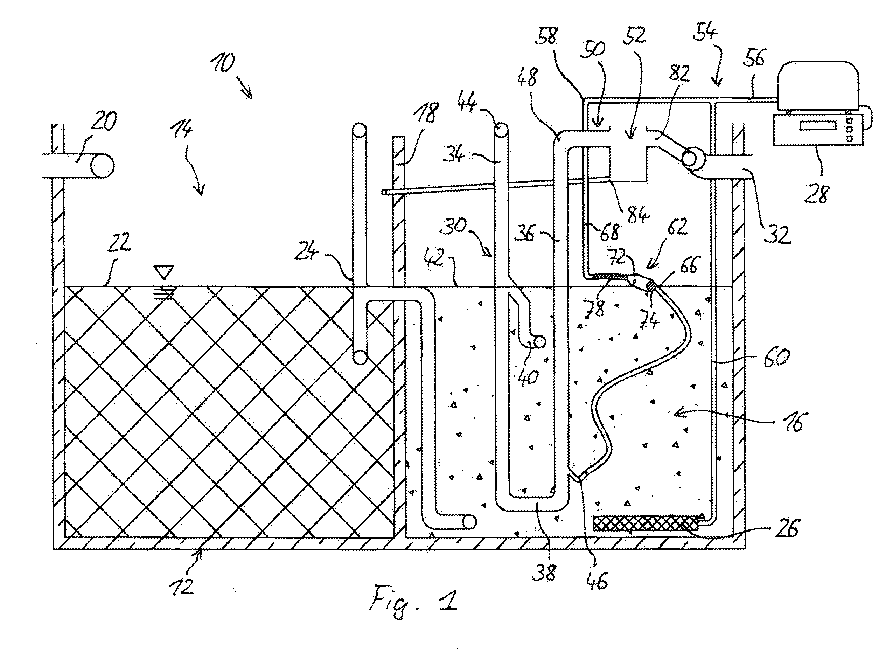

Die biologische Klärvorrichtung 10 aus Fig. 1 umfasst einen Klärbehälter 12 mit einer Vorklärkammer 14 (in Fig. 1 links) und einer biologischen Klärkammer, die im folgenden einfach als Klärkammer 16 bezeichnet werden soll. Die beiden Kammern 14,16 sind voneinander durch eine Trennwand 18 getrennt. Über einen Zulauf 20 gelangt Abwasser in die Vorklärkammer 14, wo sich Grobstoffe absetzen oder an der Wasseroberfläche 22 ablagern können. Die Endreinigung des Abwassers findet in der Klärkammer 16 statt, die Belebtschlamm enthält, der hier nicht näher dargestellt ist. Über ein Überlaufrohr 24 wird das vorgereinigte Abwasser aus der Vorklärkammer 14 in die Klärkammer 16 überführt, so dass die beiden Kammern 14,16 hydraulisch miteinander verbunden sind.

Zur Förderung der biologischen Klärung und zum Durchmischen des Inhalts der Klärkammer 16 ist in dieser ein Belüfter 26 angeordnet, der z. B. ein Tellerbelüfter oder ein Rohrbelüfter sein kann. Der Belüfter 26 wird durch Druckluft gespeist, die von einem Verdichter 28 zugeführt wird, der sich außerhalb des Klärbeckens 10 befindet.

Außerdem befindet sich in der Klärkammer 16 ein Druckluftheber 30, der dazu dient, Klarwasser aus der Klärkammer 16 einem Klarwasserauslass 32 zuzuführen. Überdies dient der Druckluftheber 30 auch zur Rückführung von überschüssigem Belebtschlamm in die Vorklärkammer 14. Der Heber 30 ist insgesamt etwa U-förmig ausgebildet, mit zwei vertikalen Rohrschenkeln 34,36, die an ihrem unteren Ende durch einen horizontalen Rohrabschnitt 38 miteinander verbunden sind. Während ein erster Schenkel 34 mit einem Klarwassereinlass 40 in der Nähe des Flüssigkeitsspiegels 42 der Klärkammer 16 ausgestattet ist und sein oberes Ende 44 weit über den Flüssigkeitsspiegel 42 hinausragt, stellt der zweite Schenkel 36 des Drucklufthebers 30 ein Steigrohr dar, dessen unteres Ende einen Druckluftanschluss 46 aufweist und dessen oberes Ende 48 in eine Ablaufleitung 50 mündet, die zum Klarwasserauslass 32 führt. Insgesamt ist die Ablaufleitung 50 leicht geneigt, und ein Pufferbehälter 52 ist in die Ablaufleitung 50 integriert, dessen Funktion später noch näher erläutert werden soll.

Das Steigrohr 36 lässt sich über den Druckluftanschluss 46 mit Druckluft beaufschlagen, die ihm vom Verdichter 28 zugeführt wird. Der Flüssigkeitsinhalt des Steigrohrs 36 steigt dann nach oben, verlässt das Steigrohr über dessen oberes Ende 48 in die Ablaufleitung 50 und gelangt schließlich über den Pufferbehälter 52 zum Klarwasserauslass 32.

Von dem Verdichter 28 führt eine Druckluftleitung zum Belüfter 26 und zum Druckluftheber 30, die insgesamt mit der Bezugsziffer 54 bezeichnet ist. Die Druckluftleitung 54 umfasst einen gemeinsamen Hauptleitungsabschnitt 56, der von einem Druckluftanschluss des Verdichters 28 ausgeht und der sich in eine erste Zweigleitung 58 und eine zweite Zweigleitung 60 verzweigt. Die erste Zweigleitung 58 führt zum Druckluftanschluss 46 des Drucklufthebers 30, und die zweite Zweigleitung 60 führt zum Belüfter 26. Der Druckluftanschluss 46 ist auf einem etwas höheren Niveau angeordnet als der Belüfter 26.

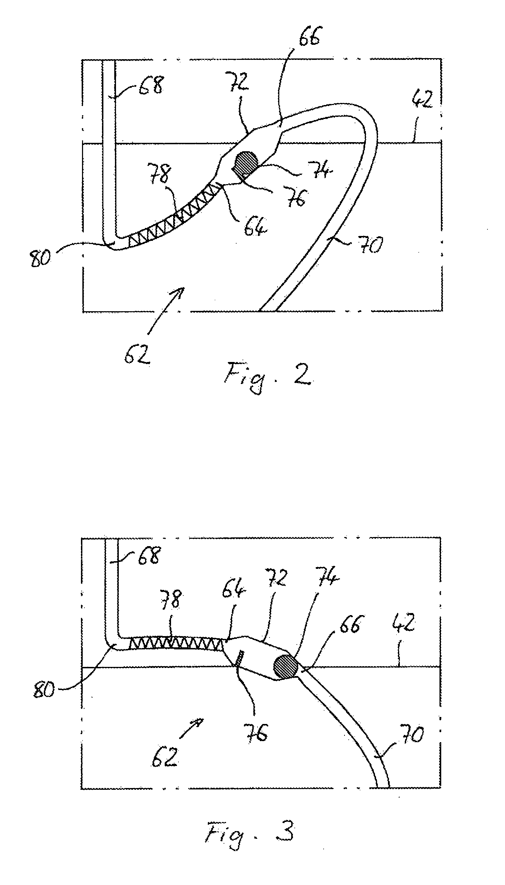

Zur Verteilung des Druckluftstroms der Druckluftleitung 54 auf die erste Zweigleitung 58 und die zweite Zweigleitung 60 dient ein Schwimmventil 62, das innerhalb der ersten Zweigleitung 58 angeordnet ist. Dieses Schwimmventil 62 weist einen Eingang 64 und einen Ausgang 66 auf. Ein stromaufwärts gelegenes erstes Teilstück 68 der ersten Zweigleitung 58 mündet in den Eingang 64, während vom Ausgang 66 ein stromabwärts gelegenes zweites Teilstück 70 der ersten Zweigleitung 58 ausgeht, das zum Druckluftanschluss 46 des Drucklufthebers 30 führt. Gemäß Fig. 2 und 3 umfasst das Schwimmventil 62 eine Röhre 72 als schwimmfähigen Hohlkörper, deren Enden den Eingang 64 und den Ausgang 66 des Schwimmventils 62 bilden. Innerhalb der Röhre 72 befindet sich ein Ventilkörper 74 in Form einer magnetischen Kugel, die in der Röhre 72 hin und her rollen kann. Der Ausgang 66 umfasst einen Ventilsitz, der durch den Ventilkörper 74 verschlossen werden kann, so dass keine Druckluft mehr durch den Ausgang 66 gelangen kann und das Schwimmventil 62 verschlossen ist. In der Nähe des Eingangs 64 befindet sich ein Anschlag 76 für den Ventilkörper 74, gegen welchen der Ventilkörper 74 beweglich ist. In der angeschlagenen Stellung sind sowohl der Eingang 64 als auch der Ausgang 66 geöffnet. Der Anschlag 76 ist ebenfalls aus einem magnetischen Material, an welchem die Kugel, die den Ventilkörper 74 bildet, magnetisch haften kann.

Aufgrund ihres Auftriebs schwimmt die Röhre 72 in der Flüssigkeit innerhalb der Klärkammer 16. Der Eingang 64 der Röhre 72 ist über einen Schlauchabschnitt 78, der einen Teil des ersten Teilstücks 68 der ersten Zweigleitung 58 bildet, mit einem festen Haltepunkt 80 innerhalb der Klärkammer 16 verbunden. Dieser Haltepunkt 80 kann beispielsweise durch das untere Ende eines feststehenden Rohrabschnitts gebildet werden, der einen weiteren Teil des ersten Teilstücks 68 bildet, an welchen sich der Schlauchabschnitt 78 anschließt. Verändert sich der Flüssigkeitspegel 42 in der Klärkammer 16, folgt das Schwimmventil 62 dieser Aufwärts- und Abwärtsbewegung, während es über den Schlauchabschnitt 78 am Haltepunkt 80 befestigt ist. Dies führt dazu, dass das Schwimmventil 62 insgesamt eine Kippbewegung durchführt, bei welcher der Haltepunkt 80 die Kippachse bildet. Durch diese Kippbewegung kann das Schwimmventil 62 zwischen unterschiedlichen Schaltstellungen geschaltet werden. Fig. 1 sowie auch die vergrößerte Darstellung in Fig. 3 zeigen eine Situation mit relativ niedrigem Flüssigkeitspegel 42, in der das Schwimmventil 62 vom Haltepunkt 80 aus betrachtet nach unten geneigt ist, d. h., der Ausgang 66 befindet sich auf einem Niveau unterhalb des Eingangs 64 des Schwimmventils 62. Diese Stellung soll im folgenden als zweite Schaltstellung bezeichnet werden, in Abgrenzung zu einer ersten Schaltstellung, die vergrößert in Fig. 2 dargestellt ist und in der das Schwimmventil 62 vom Haltepunkt 80 aus betrachtet aufwärts gekippt ist. Die erste Schaltstellung wird eingenommen, wenn der steigende Flüssigkeitspegel 42 ein vorbestimmtes Niveau überschritten hat und und damit ein vorbestimmter Neigungswinkel des Hohlkörpers 72 erreicht worden ist. In der ersten Schaltstellung liegt der Ventilkörper 74 am Anschlag 76 an, und der Eingang 64 und der Ausgang 66 sind geöffnet, so dass die erste Zweigleitung 58 von Druckluft durchströmt werden kann. Hingegen stellt die zweite Schaltstellung aus Fig. 3 die geschlossene Ventilstellung dar, in der der Ventilkörper 74 an dem Ventilsitz am Ausgang 66 anliegt und diesen verschließt, so dass der Durchfluss durch das Schwimmventil 62 blockiert ist.

Aufgrund seiner kippbaren Anordnung bezüglich des feststehenden Haltepunkts 80 lässt sich das Schwimmventil 62 somit in Abhängigkeit von der Höhe des Flüssigkeitspegels 42 zwischen einer geöffneten und einer geschlossenen Stellung schalten. Wird eine bestimmte Höhe des Flüssigkeitspegels 42 überschritten, gelangt das Schwimmventil 62 automatisch in die erste Schaltstellung und schaltet auf Durchfluss.

Ist der Verdichter 28 in Betrieb, werden beide Zweigleitungen 58,60 über die gemeinsame Hauptleitung 56 mit Druckluft beaufschlagt. In der Situation in Fig. 1, in der der Flüssigkeitspegel 42 in der Klärkammer 16 niedrig ist, ist jedoch die erste Zweigleitung 58 blockiert, da das Schwimmventil 62 sich in der zweiten Schaltstellung befindet, und es kann keine Druckluft zum Druckluftheber 30 gelangen. Somit wird ausschließlich der Belüfter 26 über die zweite Zweigleitung 60 mit Druckluft versorgt. Dies entspricht einer Belüftungsphase der biologischen Klärvorrichtung 10, in der der Inhalt der Klärkammer 16 intermittierend belüftet wird, während der Flüssigkeitspegel 42 relativ niedrig ist. Die intermittierende Belüftung wird durch eine entsprechende intermittierende Steuerung des Betriebs des Verdichters 28 erreicht. In der Belüftungsphase wechseln sich Perioden der Belüftung mit Belüftungspausen ab. Durch die Blockierung der ersten Zweigleitung 58 wird verhindert, dass der Inhalt der Klärkammer 16 durch den Druckluftheber 30 abgefördert wird.

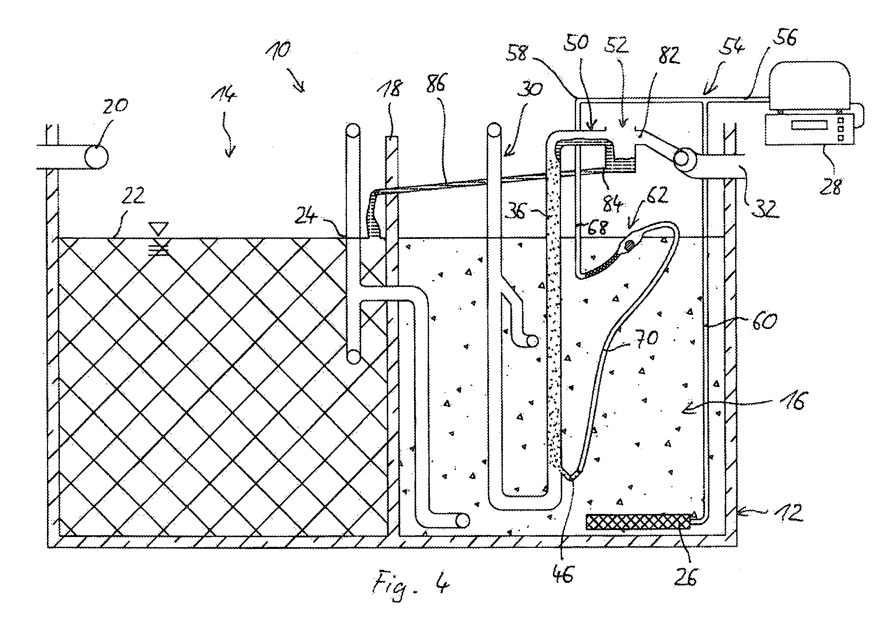

Fig. 4 stellt eine Situation am Ende der Belüftungsphase dar. Der Flüssigkeitspegel 42 ist hier in der Klärkammer 16 und der damit kommunizierenden Vorklärkammer 14 so weit angestiegen, dass das Schwimmerventil 62 aus der zweiten Schaltstellung (Fig. 3) in die erste Schaltstellung (Fig. 2) gelangt. Hierbei bewegt sich der Ventilkörper 74 aus seinem Sitz am Ausgang 66 der Röhre 72 in Richtung des Eingangs 64 und schlägt an dem Anschlag 76 an, so dass das Schwimmventil 62 öffnet. Wird der Verdichter 28 für einen weiteren Belüftungsstoß betrieben, gelangt die Druckluft über die Druckluftleitung 54 durch die erste Zweigleitung 58 zum Druckluftanschluss 46 des Drucklufthebers 30. Das Steigrohr 36 wird somit mit Druckluft beaufschlagt, und sein Inhalt wird nach oben aus seinem oberen Ende 48 in die Ablaufleitung 50 gedrückt und strömt in den Pufferbehälter 52. Durch die Anordnung des Belüfters 26 am Boden der Klärkammer und des Druckluftanschlusses 46 in einer höheren Position darüber wird erreicht, dass der hydrostatische Gegendruck in der zweiten Zweigleitung 60 höher ist als in der erste Zweigleitung 58, so dass keine Luft mehr zum Belüfter 26 gelangt.

Es ist erwünscht, dass der Verdichter 28 in der Situation in Fig. 4 vom intermittierenden Belüftungsbetrieb in eine neue Betriebsphase umschaltet, die die einen oder mehrere Spülstöße durch den Druckluftheber 30 und zu einem späteren Zeitpunkt eine Periode eines kontinuierlichen Betriebs zur Klarwasserabförderung durch das Steigrohr 36 umfasst. Diese neue Betriebsphase wird durch einen Schaltimpuls eingeleitet, der von einem elektrischen Schalter erzeugt wird, welcher in den Figuren nicht näher dargestellt ist. Dieser elektrische Schalter kann beispielsweise in das Schwimmventil 62 integriert sein und wird durch eine Bewegung des Ventilkörpers 74 beim Kippen der Röhre 72 in die erste Schaltstellung geschlossen. Bei dieser Ausführungsform ist der elektrische Schalter beispielsweise am Anschlag 76 angebracht und wird mechanisch beim Anschlagen der Kugel an den Anschlag 76 geschlossen. Der Schaltimpuls wird also beim Öffnen der ersten Zweigleitung 58 erzeugt, wenn das Schwimmerventil 62 sich öffnet.

Der elektrische Schalter kann jedoch auch an einer anderen Stelle angeordnet sein, beispielsweise im Pufferbehälter 52. Hierbei kann es sich um einen Reed-Schalter handeln, der sich bei Überschreiten eines bestimmten Flüssigkeitspegels im Pufferbehälter 52 schließt und den Schaltimpuls auslöst.

Ist der Reed-Schalter auf einer niedrigen Höhe im Pufferbehälter 52 angeordnet, genügt bereits ein geringes Flüssigkeitsvolumen im Pufferbehälter 52, um den Reed-Schalter zu schließen. Der Schaltimpuls wird also in diesem Fall unmittelbar beim Einsetzen der Abförderung von Flüssigkeit aus dem oberen Ende 48 des Steigrohrs 36 erzeugt.

In einer weiteren denkbaren Ausführungsform befindet sich der Schalter innerhalb des Steigrohrs 36 und wird geschlossen, wenn ein Flüssigkeitsvolumen durch das Steigrohr 36 nach oben strömt. Auch dies ist der Fall, wenn die Abförderung von Flüssigkeit durch das Steigrohr 36 einsetzt.

Der Pufferbehälter 52 weist zwei Auslässe auf, nämlich einen höher gelegenen Auslass 82, der über einen weiteren Abschnitt der Ablaufleitung 50 zum Klarwasserauslass 32 führt, und einen weiteren tiefer gelegenen Auslass 84 am Boden des Pufferbehälters 52, an den sich in der vorliegenden Ausführungsform eine Schlammrückführungsleitung 86 anschließt, die über die Trennwand 18 führt und in die Vorklärkammer 14 mündet. Schlamm, der in dem Pufferbehälter 52 gefördert wird, kann durch den tieferen Auslass 84 in die Vorklärkammer 14 zurückströmen. Abweichend von der hier dargestellten Ausführungsform kann der Schlamm aus dem tiefer gelegenen Auslass 84 auch in die Klärkammer 16 zurückgeführt werden.

Der tiefer gelegene Auslass 84 weist einen kleineren freien Strömungsquerschnitt auf als der höher gelegene Auslass 82. Dies hat zur Folge, dass bei kontinuierlicher Abförderung von Flüssigkeit aus dem Steigrohr 36 nur eine geringe Schlamm- bzw. Flüssigkeitsmenge durch den tiefer gelegenen Auslass 84 abströmen kann, während sich der Pufferbehälter 52 allmählich bis zum höher gelegenen Auslass 82 füllt und Flüssigkeit über diesen in Richtung des Klarwasserauslasses 36 strömen kann. Wird hingegen nur ein Förderstoß durchgeführt, in welchem ein begrenztes Schlamm- bzw. Flüssigkeitsvolumen in den Pufferbehälter 52 gelangt, kann vermieden werden, dass der Pufferbehälter 52 sich bis zu dem höher gelegenen Auslass 82 füllt, und das abgeförderte begrenzte Volumen strömt ausschließlich über den tiefer gelegenen Auslass 84 ab.

Mit Hilfe des so konstruierten Pufferbehälters 52 kann somit bei entsprechender Ansteuerung der Druckluftzufuhr ein begrenztes Schlamm- bzw. Flüssigkeitsvolumen rückgeführt werden, bevor der Klarwasserabzug über den höher gelegenen Auslass 82 beginnt.

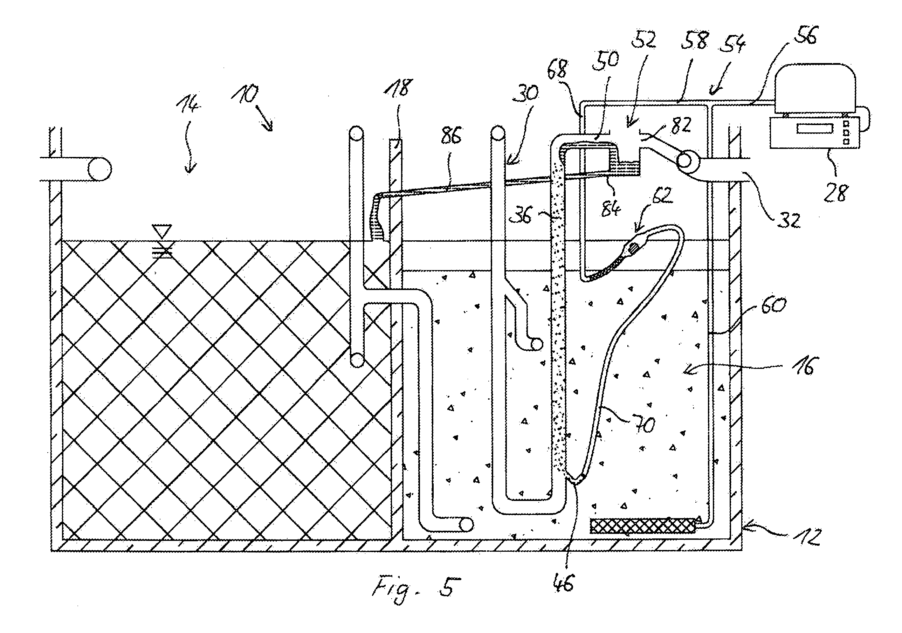

Zu diesem Zweck wird zunächst am Beginn der zweiten Betriebsphase, die durch den Schaltimpuls des elektrischen Schalters eingereicht wird, ein Förderstoß durch den Verdichter 28 ausgeführt. Der Verdichter 28 wird zu diesem Zweck lediglich für einen kurzen vorbestimmten Zeitraum betrieben. Demzufolge wird ein begrenztes Flüssigkeitsvolumen aus dem Steigrohr 36 in den Pufferbehälter 52 gefördert, wie es in Fig. 5 dargestellt ist. Es wird an dieser Stelle angemerkt, dass bei einer Ausführungsform, bei der der elektrische Schalter im Pufferbehälter 52 selbst angeordnet ist, die Belüftungsphase (als erste Betriebsphase) genau betrachtet erst in dem Moment beendet wird, in welchem Flüssigkeit in dem Pufferbehälter 52 gelangt. Das bedeutet, dass der Förderstoß bereits vor dem Auslösen des Schaltimpulses beginnt. Das Ende des Förderstoßes wird allerdings zeitlich durch eine entsprechende Betriebssteuerung des Verdichters 28 bestimmt, um das Volumen des Schlamms zu begrenzen, der in dem Spülstoß in dem Pufferbehälter 52 gelangt. Für einen ordnungsgemäßen Betrieb der biologischen Klärvorrichtung 10 ist es zu verhindern, dass Schlamm in den Klarwasserauslass 32 gelangt. Vielmehr fließt der Schlamm vollständig durch den tiefer gelegenen Auslass 84 in die Vorklärkammer 14 ab.

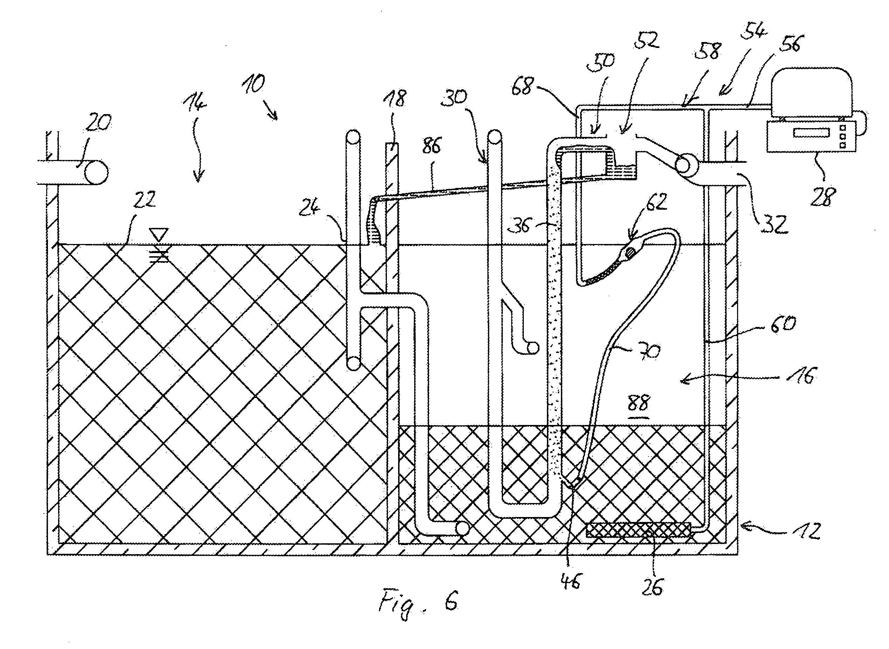

Nach diesem Förderstoß zur Schlammrückführung wird der Verdichter 28 für einen längeren Zeitraum abgeschaltet, so dass eine Absetzphase in der Klärkammer 16 stattfinden kann. In dieser setzt sich der Belebtschlamm am Boden der Klärkammer 16 ab, wie es schematisch in Fig. 6 gezeigt ist. Über dem Belebtschlamm bildet sich bis zu einer gewissen Tiefe unterhalb des Flüssigkeitspegels 42 eine Klarwasserzone 88 aus. Vor dem eigentlichen Klarwasserabzug findet ein weiterer relativ kurzer Spülstoß statt, auf die gleiche Weise wie im Zusammenhang mit der Schlammrückführung vorstehend beschrieben. Der Spülstoß zur Heberspülung ist ebenfalls relativ kurz bemessen, so dass lediglich ein geringes Flüssigkeitsvolumen in den Pufferbehälter 52 gefördert wird, das in die Vorklärung 14 abfließt. Nach diesem Spülstoß kann angenommen werden, dass sich lediglich sauberes Klarwasser im Steigrohr 36 befindet, das zur Abförderung bereitsteht.

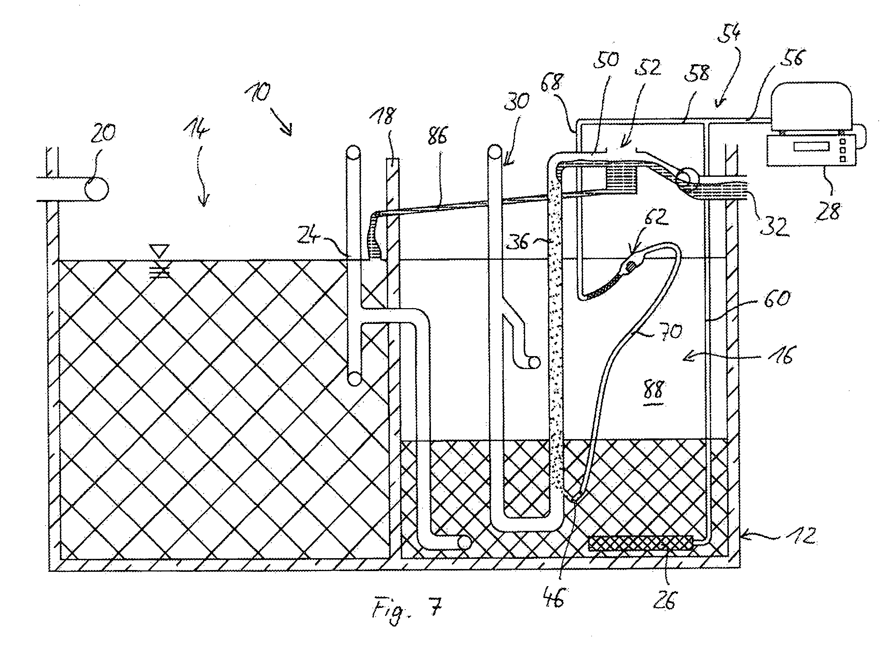

Der Klarwasserabzug ist in Fig. 7 dargestellt. Hier wird während einer längeren Betriebsperiode des Verdichters 28 kontinuierlich das Steigrohr 36 mit Druck beaufschlagt und das darin enthaltene Klarwasser über die Ablaufleitung 50 zum Klarwasserauslass 32 abgeführt. Durch diese kontinuierliche Förderung bleibt der Pufferbehälter 52 stets gefüllt und leert sich überwiegend über den höher gelegenen Auslass 82. Gleichzeitig kann während des Klarwasserabzugs ein geringer Teil des Klarwassers über den tiefer gelegenen Auslass 84 abströmen. Diese abgezweigte Menge ist jedoch für die Funktion der Anlage zu vernachlässigen.

Mit fortschreitendem Klarwasserabzug senkt sich der Flüssigkeitspegel 42 in der Klärkammer 16 ab, so dass das Schwimmventil 62 wieder in die zweite Schaltstellung kippen und die erste Zweigleitung 58 verschließen kann. Die Druckluftzufuhr zum Druckluftheber 30 wird infolgedessen unterbrochen und damit auch die Abförderung von Klarwasser aus dem Steigrohr 36. Der Pufferbehälter 52 läuft dann über den tiefer gelegenen Auslass 84 leer. Ist der elektrische Schalter im Pufferbehälter 52 angeordnet, ändert dieser erneut seinen Schaltzustand und erzeugt einen weiteren Schaltimpuls zum Umschalten der Steuerung des Verdichters 28 auf einen intermittierenden Betrieb zur Belüftung der Klärkammer 16, wie in Fig. 1 dargestellt. Damit beginnt ein neuer Betriebszyklus der biologischen Klärvorrichtung 10.

Ist der elektrische Schalter im Schwimmventil 62 angeordnet, ändert sich sein Schaltzustand durch eine Bewegung des Ventilkörpers 74 in den Ventilsitz. Beispielsweise wird durch das Öffnen dieses Schalters der Schaltimpuls zum Beenden der Klarwasserabzugsphase und zum erneuten Beginn der Belüftungsphase erzeugt.

Das Schwimmventil 62 kann eine Schalthysterese aufweisen, derart, dass das Kippen von der zweiten Schaltstellung in die erste Schaltstellung bei Überschreiten eines vorbestimmten höheren Pegels stattfindet, als das Zurückschalten aus der ersten Schaltstellung in die zweite Schaltstellung, das bei einem niedrigeren Flüssigkeitspegel 42 stattfinden kann. Auf diese Weise wird gewährleistet, dass der Flüssigkeitspegel 42 nicht ständig um einen bestimmten Stand oszilliert. Vielmehr findet der Klarwasserabzug statt, bis ein tieferer Flüssigkeitspegel erreicht wird, bei welchem das Schwimmventil 62 über die zweite Schaltstellung gemäß Fig. 1 zum Verschließen der ersten Zweigleitung 58 einnimmt. Ein erneutes Öffnen des Schwimmventils 62 findet dann erst beim erneuten Erreichen des höheren Flüssigkeitspegels statt.

Diese Schalthysterese wird auch durch die magnetische Haftung des Ventilkörpers 74 am Anschlag 76 begünstigt. Außerdem kann dies durch eine Krümmung oder einen Knick im Rohr 72 erreicht werden, so dass die Ventilkugel die Krümmung oder die Knickstelle überwinden muss, um den jeweils anderen Schaltzustand einzunehmen.

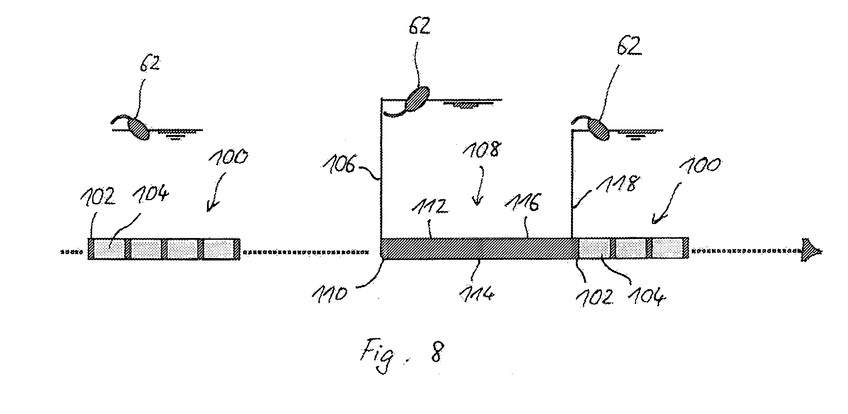

Das Diagramm in Fig. 8 zeigt nochmals die verschiedenen Betriebsphasen und Betriebszustände der vorstehend beschriebenen biologischen Klärvorrichtung 10. Die Belüftungsphase stellt eine erste Betriebsphase 100 dar, in der sich Belüftungsperioden 102 und Belüftungspausen 104 abwechseln. Während der Belüftungsphase befindet sich der Schwimmschalter 62 in der zweiten Schaltstellung. Kippt das Schwimmventil 62 aufgrund des Überschreitens eines vorbestimmten Flüssigkeitspegels in die erste Schaltstellung, wird aufgrund des Öffnens der ersten Zweigleitung 58 und/oder des Einsetzens der Abförderung von Flüssigkeit in den Pufferbehälter 52 ein erster Schaltimpuls 106 durch den elektrischen Schalter ausgelöst. Dieser Schaltimpuls wird an eine entsprechende Steuerung des Verdichters 28 gegeben, und die Steuerung beendet die erste Betriebsphase 100 und leitet die zweite Betriebsphase 108 ein.

Zu Beginn der zweiten Betriebsphase 108 findet ein erster Förderstoß 110 zur Schlammrückführung statt, gefolgt von einer Absetzphase 112, in der der Verdichter 28 keine Druckluft erzeugt. Auf die Absetzphase 112 folgt ein Spülstoß 114 zur Spülung des Hebers, und anschließend findet der Klarwasserabzug 116 statt. Während der Periode des Klarwasserabzugs 116 wird der Verdichter 28 kontinuierlich betrieben.

Die Periode des Klarwasserabzugs 116 endet, wenn das Schwimmventil 62 bei einem vorbestimmten Flüssigkeitspegel aus der ersten Kippstellung in die zweite Kippstellung kippt und das Schwimmventil 62 verschließt. Damit wird durch die Bewegung des Ventilkörpers 74 oder durch Aussetzen der Abförderung von Flüssigkeit aus dem Steigrohr 36 der Schaltzustand des elektrischen Schalters wieder geändert und ein weiterer Schaltimpuls 118 ausgelöst. Dieser beendet den Klarwasserabzug 116 und die zweite Betriebsphase 108 der biologischen Klärvorrichtung 10 und insgesamt einen Betriebszyklus. Gleichzeitig wird mit einem neuen Betriebszyklus begonnen, der wiederum mit einer ersten Betriebsphase 100 beginnt, in der eine Belüftung stattfindet, und so fort.

## Patentansprüche

1. Biologische Klärvorrichtung (10), mit einer Klärkammer (16) und Einrichtungen zur Beförderung und Behandlung von Abwasser, welche Einrichtungen umfassen:
einen Druckluftheber (30) mit einem Steigrohr (36), dessen unteres Ende einen Druckluftanschluss (46) aufweist und dessen oberes Ende (48) an einen Klarwasserauslass (32) angeschlossen ist,
einen Belüfter (26),
und eine Druckluftquelle (28) zur Beaufschlagung des Drucklufthebers (30) und/oder des Belüfters (26) mit Druckluft über eine Druckluftleitung (54), die sich von der Druckluftquelle (28) ausgehend in eine erste Zweigleitung (58) und in eine zweite Zweigleitung (60) verzweigt, von denen die erste Zweigleitung (58) zum Druckluftanschluss (46) des Drucklufthebers (30) führt und die zweite Zweigleitung (60) zum Belüfter (26) führt,
wobei die Einrichtungen ferner ein Schwimmventil (62) umfassen, das schwimmend in der Klärkammer (16) zur Steuerung der Verteilung des Druckluftstroms der Druckluftleitung (54) auf die erste (58) und/oder die zweite Zweigleitung (60) angeordnet ist und einen Hohlkörper (72) sowie einen Ventilkörper (74) umfasst, der im Hohlkörper (72) zwischen einer ersten und einer zweiten Schaltstellung beweglich gelagert ist,
welcher Hohlkörper (72) einen Eingang (64) umfasst, über den der Hohlkörper (72) mit Druckluft beaufschlagbar ist, und mindestens einen Ausgang (66), der über zumindest ein Teilstück (70) der ersten Zweigleitung (58) mit dem Druckluftanschluss (46) des Drucklufthebers (30) verbunden ist und einen Ventilsitz aufweist, der durch den Ventilkörper (74) in der zweiten Schaltstellung verschlossen wird und in der ersten Schaltstellung geöffnet ist,
und welcher Hohlkörper (72) um eine Achse in Abhängigkeit vom Flüssigkeitspegel der Klärkammer (16) kippbar angeordnet ist, derart, dass er bei Überschreiten eines vorbestimmten Pegels einen Neigungswinkel erreicht, in dem der Ventilkörper (74) sich aus der zweiten Schaltstellung in die erste Schaltstellung bewegen kann,
und dass die Einrichtungen außerdem einen elektrischen Schalter umfassen, der beim Öffnen der ersten Zweigleitung (58) und/oder beim Einsetzen der Abförderung von Flüssigkeit aus dem oberem Ende des Steigrohrs (36) seinen Schaltzustand ändert und einen Schaltimpuls zur Steuerung der Druckluftquelle (28) erzeugt,
**dadurch gekennzeichnet, dass** der Belüfter (26) in der Klärkammer (16) angeordnet ist und die zweite Zweigleitung (60) ausschließlich zum Belüfter (26) führt, und dass die erste Zweigleitung (58) ausschließlich zum Druckanschluss (46) des Drucklufthebers (30) führt.

2. Biologische Klärvorrichtung gemäß Anspruch 1, **dadurch gekennzeichnet, dass** das Schwimmventil (62) innerhalb der ersten Zweigleitung (58) angeordnet ist, von welcher ein stromaufwärts gelegenes flexibles erstes Teilstück (68) in den Eingang des Hohlkörpers (72) mündet, und dass der Hohlkörper (72) lediglich einen Ausgang (66) umfasst, an welchen ein stromabwärts gelegenes zweites Teilstück (70) der ersten Zweigleitung angeschlossen ist, das zum Druckluftheber (30) führt.

3. Biologische Klärvorrichtung gemäß Anspruch 2, **dadurch gekennzeichnet, dass** der Hohlkörper (72) als Röhre ausgebildet ist, deren Enden den Eingang (64) und den Ausgang (66) des Hohlkörpers (72) bilden, und dass das Eingangsende der Röhre mit der Kippachse verbunden ist.

4. Biologische Klärvorrichtung gemäß Anspruch 3, **dadurch gekennzeichnet, dass** der Ventilkörper (74) eine Kugel aus magnetischem Material ist, und dass die Röhre (72) an ihrem Eingangsende einen Anschlag (76) aufweist, an dem die Kugel (74) magnetisch haften kann.

5. Biologische Klärvorrichtung gemäß einem der vorhergehenden Ansprüche, **dadurch gekennzeichnet, dass** das obere Ende (48) des Steigrohrs (36) in eine Ablaufleitung (50) mündet, die zum Klarwasserauslass (32) führt, und dass in diese Ablaufleitung (50) ein Pufferbehälter (52) mit zwei Auslässen (82,84) integriert ist, von denen ein höher gelegener Auslass (82) zum Klarwasserauslass (32) führt und ein tiefer gelegener Auslass (84) einen kleineren freien Strömungsquerschnitt aufweist als der höher gelegene Auslass (82).

6. Biologische Klärvorrichtung gemäß Anspruch 5, **dadurch gekennzeichnet, dass** der tiefer gelegene Auslass (84) des Pufferbehälters (52) zurück in die Klärkammer (16) oder zu einer Vorklärkammer (14) führt, aus welcher die Klärkammer (16) mit vorgereinigtem Abwasser gespeist wird.

7. Biologische Klärvorrichtung gemäß einem der vorhergehenden Ansprüche, **dadurch gekennzeichnet, dass** der elektrische Schalter in das Schwimmventil (62) integriert ist und durch eine Bewegung des Ventilkörpers (74) beim Kippen des Hohlkörpers (72) in die erste Schaltstellung schließbar ist.

8. Biologische Klärvorrichtung gemäß einem der Ansprüche 1 bis 6, **dadurch gekennzeichnet, dass** der elektrische Schalter in das Steigrohr (36) integriert ist und durch einen Volumenstrom durch das Steigrohr (36) schließbar ist.

9. Biologische Klärvorrichtung gemäß Anspruch 5 oder 6, **dadurch gekennzeichnet, dass** der elektrische Schalter in den Pufferbehälter (52) integriert ist und durch Überschreiten eines vorbestimmten Füllhöhe des Pufferbehälters (52) schließbar ist.

10. Biologische Klärvorrichtung gemäß Anspruch 9, **dadurch gekennzeichnet, dass** der elektrische Schalter ein Reed-Schalter ist, der auf einer Höhe oberhalb des tiefer gelegenen Auslasses (84) angeordnet ist.

11. Biologische Klärvorrichtung gemäß einem der vorhergehenden Ansprüche, **dadurch gekennzeichnet, dass** die Druckluftquelle (28) ein Verdichter ist, der eine Steuerung zum Betrieb des Verdichters (28) in mindestens zwei verschiedenen Betriebsphasen umfasst, die zeitlich aufeinander folgen, nämlich eine erste Betriebsphase (100), in der der Verdichter (28) intermittierend betrieben wird, gefolgt von einer zweiten Betriebsphase (108), die zumindest einen Zeitraum (116) einer kontinuierlichen Betriebs der Verdichters (28) umfasst, und dass die Steuerung bei Empfang eines Schaltimpulses (106) vom elektrischen Schalter die erste Betriebsphase (100) beendet und die zweite Betriebsphase (108) startet.

12. Biologische Klärvorrichtung gemäß Anspruch 11, **dadurch gekennzeichnet, dass** der elektrische Schalter ferner dazu vorgesehen ist, beim Schließen der ersten Zweigleitung (58) und/oder beim Aussetzen der Abförderung von Flüssigkeit aus dem oberem Ende des Steigrohrs (36) seinen Schaltzustand zu ändern und einen weiteren Schaltimpuls auszulösen, der die zweite Betriebsphase (108) beendet und erneut eine erste Betriebsphase (100) startet.

13. Verfahren zum Betrieb einer biologischen Klärvorrichtung (10) gemäß einem der Ansprüche 1 bis 12, **dadurch gekennzeichnet, dass** in einer ersten Betriebsphase (100) die Druckluftquelle (28) intermittierend betrieben wird, während bei einem Füllstand der Klärkammer (16) unterhalb eines vorbestimmten Pegels die erste Zweigleitung (58) blockiert wird, während die zweite Zweigleitung (60) geöffnet bleibt, und dass bei Überschreiten dieses Pegels die erste Zweigleitung (58) zur Druckbeaufschlagung des Drucklufthebers (30) freigegeben wird, die Druckluftquelle die erste Betriebsphase (100) beendet und eine zweite Betriebsphase (108) beginnt, die zumindest einen Zeitraum (116) eines kontinuierlichen Betriebs der Druckluftquelle (28) umfasst.

14. Verfahren gemäß Anspruch 13, **dadurch gekennzeichnet, dass** die zweite Betriebsphase (108) mit einem Förderstoß (110) zur Abförderung von Schlamm aus dem Steigrohr (36) des Drucklufthebers (30) beginnt.

15. Verfahren gemäß Anspruch 13 oder 14, **dadurch gekennzeichnet, dass** die zweite Betriebsphase (108) eine Absetzphase (112) vorbestimmter Länge umfasst, die dem Zeitraum einer kontinuierlichen Betriebs (116) der Druckluftquelle (28) zeitlich vorgelagert ist.

16. Verfahren gemäß Anspruch 15, **dadurch gekennzeichnet, dass** die zweite Betriebsphase (108) einen Spülstoß (114) zur Spülung des Steigrohrs (36) des Drucklufthebers (30) umfasst, der der Absetzphase (112) folgt und an welchen sich der Zeitraum (116) einer kontinuierlichen Betriebs der Druckluftquelle (28) anschließt.

17. Verfahren gemäß einem der Ansprüche 13 bis 16, **dadurch gekennzeichnet, dass** bei Überschreiten des vorbestimmten Pegels durch Kippen des Hohlkörpers (72) in die erste Schaltstellung der Ventilsitz des Schwimmventils (62) geöffnet und die erste Zweigleitung (58) zur Druckbeaufschlagung des Drucklufthebers (30) freigegeben wird und der elektrische Schalter seinen Schaltzustand ändert, einen Schaltimpuls erzeugt und die Druckluftquelle (28) die erste Betriebsphase (100) beendet und die zweite Betriebsphase (108) beginnt.

## Claims

1. Biological clarifying device (10), comprising a clarification chamber (16) and means for transport and treatment of waste water, said means comprising:
a pneumatic jack (30) with a raiser pipe, whose lower end has a compressed air connection (46) and whose upper end (48) is connected to a clear water outlet (32),
an aerator (26),
an a compressed air source (28) for supplying the pneumatic jack (30) and/or the aerator (26) with pressurized air via a pressurized air line (54) branching, starting from the compressed air source (28), into a first branch line (58) and a second branch line (60), said first branch line (58) leading to the pressure connection (46) of the pneumatic jack (30) and said second branch line (60) leading to the aerator (26),
said means further comprising a floating valve (62) floating within the clarification chamber (16) for controlling the distribution of the pressurized air flow of the pressurized air line (54) to the first (58) and/or second branch line (60) and comprising a hollow body (72) and a valve body (74) that is supported moveable within the hollow body (72) between a first switching position and a second switching position,
said hollow body (72) comprising an inlet port (64) for supplying the hollow body (72) with pressurized air and at least one outlet port (66) connected to the pressure connection (46) of the pneumatic jack (30) via at least one section (70) of the first branch line (58) and comprising a valve seat that is closed by the valve body (74) in the first switching position and which is opened in the second switching position,
said hollow body (72) being tiltable around one axis depending on the liquid level within the clarification chamber (16) in a way that it reaches a tilting angle when the predetermined liquid level is exceeded in which the valve body (74) is moveable from the second switching position to the first switching position,
said means further comprising an electric switch that changes its switching state when the first branch line (58) is opened and/or the conveyance of liquid from the upper end of the raiser type (36) is started and which generates a switching signal for controlling the compressed air source (28),
**characterized in that** the aerator (26) is disposed within the clarification chamber (16), and the second branch line (60) leads exclusively to the aerator (26), and that the first branch line (58) leads exclusively to the pressure connection (46) of the pneumatic jack (30).

2. Biological clarification device according to claim 1, **characterized in that** the floating valve (62) is disposed within the first branch line (58) from which a flexible first section disposed upstream leads into the inlet port of the hollow body (72), and said hollow body (72) comprising exclusively one outlet port (66) to which a second section (70) of the first branch line disposed downstream is connected, which leads to the pneumatic jack (30).

3. Biological clarification device according to claim 2, **characterized in that** the hollow body (72) is provided as a tube whose ends form the inlet port (64) and the outlet port (66) of the hollow body (72), respectively, and the inlet opening of the tube is connected to the tilting axis.

4. Biological clarification device according to claim 3, **characterized in that** the valve body (74) is a ball made of a magnetic material, and the tube (72) comprises a stop (76) at its inlet opening to which the ball (64) can be attached magnetically.

5. Biological clarification device according to one of the preceding claims, further **characterized in that** the upper end (48) of the riser pipe (36) leads into a discharge line (50) leading towards the clearwater outlet (32), with a reservoir container (52) with two outlet ports (82,84) being integrated into the discharge line (50), from which one outlet port (82) disposed on a higher level leads into the clearwater outlet (32), and another outlet port (84) disposed on a lower level has a smaller free flow cross section than the high level outlet port (82).

6. Biological clarification device according to claim 5, **characterized in that** the low level outlet port (84) of the reservoir container (52) leads back into the clarification chamber (16) or to a pre-clarification chamber (14) from which the clarification chamber (16) is supplied with pre-clarified waste water.

7. Biological clarification device according to one of the preceding claims, **characterized in that** the electric switch is integrated into the floating valve (62) and can be switched into its first switching position by a movement of the valve body (74) when the hollow body (72) is tilted.

8. Biological clarification device according to one of claims 1 to 6, **characterized in that** the electric switch is integrated into the riser pipe (36) and can be closed by a volume flow through the riser pipe (36).

9. Biological clarification device according to claim 5 or 6, **characterized in that** the electric switch is integrated into the reservoir container (52) and can be closed when a predetermined filling level of the reservoir container (52) is exceeded.

10. Biological clarification device according to claim 9, **characterized in that** the electric switch is a reed switch disposed on a level higher than the low level outlet port (84).

11. Biological clarification device according to one of the preceding claims, **characterized in that** the compressed air source (28) is a compressor comprising means for controlling the operation of the compressed air source (28) in at least two subsequent operation periods, namely a first operation period (100) in which the compressor (28) is operated intermittently, followed by a second operation period (108) comprising at least one period (116) of continuous operation of the compressor (28), wherein the control means stops the first operation period (100) and starts the second operation period (108) when a switching signal (106) is received from the electric switch.

12. Biological clarification device according to claim 1, **characterized in that** the electric switch is further provided to change its switching state when the first branch line (58) is closed and/or when the discharge of fluid from the upper end of the riser pipe (36) is interrupted, and to generate another switching signal that stops the second operation period (108) and starts another first operation period (100).

13. Method for operating a biological clarification device (10) according to one of claims 1 to 12, **characterized in that** in the first operation period (100), the compressed air source (28) is operated intermittently, wherein with a liquid level within the clarification chamber (16) below a predetermined level, the first branch line (58) is blocked, keeping the second branch line (60) open, and when this liquid level is exceeded, the first branch line (58) is unblocked for pressurizing the pneumatic jack (30), the compressed air source stops the first operation period (100) and starts a second operation period (108) comprising at least one period (116) of continuous operation of the compressed air source (28).

14. Method according to claim 13, **characterized in that** the second operation period (108) starts with an initial discharge blow (110) for discharging mud from the riser pipe (36) of the pneumatic jack (30).

15. Method according to claim 13 or 14, **characterized in that** the second operation period (108) comprises a sedimentation period (112) of predetermined length earlier than the period of continuous operation (116) of the compressed air source (28).

16. Method according to claim 15, **characterized in that** the second operation period (108) comprises a flushing blow (114) for flushing the riser pipe (36) of the pneumatic jack (30), following the sedimentation period (112) and followed by the period (116) of continuous operation of the compressed air source.

17. Method according to one of claims 13 to 16, **characterized in that** when the predetermined liquid level is exceeded, the valve seat of the floating valve (62) is opened by tilting the hollow body (72) into the first switching position, unblocking the first branch line (58) for pressurizing the pneumatic jack (30), wherein the electric switch changes its switching state, generates a switching signal, wherein the compressed air source (28) ends the first operation period (100) and starts the second operation period (108).

## Revendications

1. Dispositif de clarification biologique (10), comportant une chambre de clarification (16) et des dispositifs pour transporter et traiter des eaux usées, lesquels dispositifs incluent :
un dispositif de relevage à air comprimé (30) comportant un tuyau montant (36) dont l'extrémité inférieure comporte un raccord à air comprimé (46) et dont l'extrémité supérieure (48) est raccordée à une sortie d'eau clarifiés (32),
un aérateur (26),
et une source d'air comprimé (28) destinée à alimenter en air comprimé le dispositif de relevage à air comprimé (30) et/ou l'aérateur (26) par l'intermédiaire d'une conduite d'air comprimé (54) qui se divise en partant de la source d'air comprimé (28) en une première conduite de dérivation (58) et en une seconde conduite de dérivation (60), parmi lesquelles la première conduite de dérivation (58) mène au raccord à air comprimé (46) du dispositif de relevage à air comprimé (30) et la seconde conduite de dérivation (60) mène à l'aérateur (26),
dans lequel les dispositifs incluent en outre un clapet flottant (62) qui est agencé de manière flottante dans la chambre de clarification (16) pour commander la répartition de l'écoulement d'air comprimé de la conduite d'air comprimé (54) entre la première (58) et/ou la seconde (60) conduite de dérivation, et qui inclut un corps creux (72) ainsi qu'un corps de clapet (74) qui est monté de manière mobile dans le corps creux (72) entre une première position de commutation et une seconde position de commutation,
lequel corps creux (72) inclut une entrée (64) par l'intermédiaire de laquelle le corps creux (72) peut être alimenté en air comprimé, et au moins une sortie (66) qui est repliée au raccord à air comprimé (46) du dispositif de relevage à air comprimé (30) par l'intermédiaire d'au moins une portion (70) de la première conduite de dérivation (58), et comporte un siège de clapet qui est fermé par le corps de clapet (74) dans la seconde position de commutation et ouvert dans la première position de commutation,
et lequel corps creux (72) est agencé de manière à pouvoir basculer autour d'un axe en fonction du niveau de liquide de la chambre de clarification (16), de telle sorte qu'il atteint un angle d'inclinaison lorsqu'un niveau prédéterminé est atteint, dans lequel le corps de clapet (74) peut se déplacer de la seconde position de commutation à la première position de commutation,
et que les dispositifs incluent en outre un commutateur électrique dont l'état de commutation varie à l'ouverture de la première conduite de dérivation (58) et/ou au début de l'évacuation de liquide à partir de l'extrémité supérieure du tuyau montant (36) et qui génère une impulsion de commutation pour commander la source d'air comprimé (28),
**caractérisé en ce que** l'aérateur (26) est agencé dans la chambre de clarification (16) et la seconde conduite de dérivation (60) mène exclusivement à l'aérateur (26), et **en ce que** la première conduite de dérivation (58) mène exclusivement au raccord à air comprimé (46) du dispositif de relevage à air comprimé (30).

2. Dispositif de clarification biologique selon la revendication 1, **caractérisé en ce que** le clapet flottant (62) est agencé à l'intérieur de la première conduite de dérivation (58), à partir de laquelle une première portion souple située en amont (68) débouche dans l'entrée du corps creux (72), et **en ce que** le corps creux (72) inclut iniquement une sortie (66) à laquelle est raccordée une seconde portion située en aval (70) de la première conduite de dérivation, laquelle seconde portion mène au dispositif de relevage à air comprimé (30).

3. Dispositif de clarification biologique selon la revendication 2, **caractérisé en ce que** le corps creux (72) est réalisé sous la forme de tuyaux dont les extré-mités forment l'entrée (64) et la sortie (66) du corps creux (72), et **en ce que** l'extrémité d'entrée des tuyaux est reliée à l'axe de basculement.

4. Dispositif de clarification biologique selon la revendication 3, **caractérisé en ce que** le corps de clapet (74) est une bille en matériau magnétique, et **en ce que** l'extrémité d'entrée des tuyaux (72) comporte une butée (76) à laquelle la bille (74) peut adhérer magnétiquement.

5. Dispositif de clarification biologique selon l'une des revendications précédentes, **caractérisé en ce que** l'extrémité supérieure (48) du tuyau montant (36) débouche dans une conduite d'évacuation (50) qui mène à la sortie d'eau clarifiée (32), et **en ce qu'**un réservoir tampon (52) ayant deux sorties (82, 84) est intégré dans cette conduite d'évacuation (50), parmi lesquelles une sortie située en haut (82) mène à la sortie d'eau clarifiée (32) et une sortie située en bas (84) a une section transversale d'écoulement libre plus petite que la sortie située en haut (82).

6. Dispositif de clarification biologique selon la revendication 5, **caractérisé en ce que** la sortie située en bas (84) du réservoir tampon (52) mène de nouveau dans la chambre de clarification (16) et/ou jusqu'à une chambre de pré-clarification (14), à partir de laquelle la chambre de clarification (16) est alimentée en eaux usées pré-épurées.

7. Dispositif de clarification biologique selon l'une des revendications précédentes, **caractérisé en ce que** le commutateur électrique est intégré dans le clapet flottant (62) et peut être fermé dans la première position de commutation par un mouvement du corps de clapet (74) lors du basculement du corps creux (72).

8. Dispositif de clarification biologique selon l'une des revendications 1 à 6, **caractérisé en ce que** le commutateur électrique est intégré dans le tuyau montant (36) et peut être fermé par un débit volumétrique à travers le tuyau montant (36).

9. Dispositif de clarification biologique selon la revendication 5 ou 6, **caractérisé en ce que** le commutateur électrique est intégré dans le réservoir tampon (52) et peut être fermé lorsqu'une hauteur de remplissage prédéterminée du réservoir tampon (52) est dépassée.

10. Dispositif de clarification biologique selon la revendication 9, **caractérisé en ce que** le commutateur électrique est un commutateur reed qui est agence à une certaine hauteur au-dessus de la sortie basse (84).

11. Dispositif de clarification biologique selon l'une des revendications précédentes, **caractérisé en ce que** la source d'air comprimé (28) est un compresseur qui inclut une commande pour actionner le compresseur (28) dans au moins deux phases opératoires différentes et successives dans le temps, à savoir une première phase opératoire (100) au cours de laquelle le compresseur (28) est actionné de manière intermittente, suivie d'une seconde phase opératoire (108) qui inclut au moins une période (116) de fonctionnement continu du compresseur (28), et **en ce que** la commande met fin à la première phase opératoire (100) dès qu'une impulsion de commutation (106) est reçue du commutateur électrique et démarre la seconde phase opératoire (108).

12. Dispositif de clarification biologique selon la revendication 11, caractérisé ce que le commutateur électrique est en outre prévu pour changer son état de commutation à la fermeture de la première conduite de dérivation (58) et/ou à l'arrêt de l'évacuation de liquide à partir de l'extrémité supérieure du tuyau montant (36), et pour déclencher une impulsion de commutation supplémentaire qui met fin à la seconde phase opératoire (108) et redémarre une première phase opératoire (100).

13. Procédé pour actionner un dispositif de clarification biologique (10) selon l'une des revendications 1 à 12, **caractérisé en ce que** pendant une première phase opératoire (100), la source d'air comprimé (28) est actionnée de manière intermittente, alors que la première conduite de dérivation (58) est bloquée lorsqu'un niveau de remplissage de la chambre de clarification (16) est au-dessous d'un niveau prédéterminé et que la seconde conduite de dérivation (60) reste ouverte, et **en ce que** la première conduite de dérivation (58) est libérée lorsque ce niveau est franchi de manière à appliquer une pression au dispositif de relevage à air comprimé (30), la source d'air comprimé met fin à la première phase opératoire (100) et démarre une seconde phase opératoire (108) qui inclut au moins une période (116) de fonctionnement continu de la source d'air comprimé (28).

14. Procédé selon la revendication 13, **caractérisé en ce que** la seconde phase opératoire (108) débute par un à-coup de refoulement (110) pour évacuer des boues à partir du tuyau montant (36) du dispositif de relevage à air comprimé (30).

15. Procédé selon la revendication 13 ou 14, **caractérisé en ce que** la seconde phase opératoire (108) inclut une phase de décantation (112) de durée prédéterminée qui précède la période de fonctionnement continu (116) de la source d'air comprimé (28).

16. Procédé selon la revendication 15, **caractérisé en ce que** la seconde phase opératoire (108) inclut un à-coup de rinçage (114) pour rincer le tuyau montant (36) du dispositif de relevage à air comprimé (30), le-quel à-coup de rinçage suit la phase de décantation (112) et est suivi de la période (116) de fonctionnement continu de la source d'air comprimé (28).

17. Procédé selon l'une des revendications 13 à 16, **caractérisé en ce que** le siège de clapet du clapet flottant (62) s'ouvre lorsque le niveau prédéterminé est franchi du fait du basculement du corps creux (72) dans la première position de commutation, et la première conduite de dérivation (58) est libérée pour pressuriser le dispositif de relevage à air comprimé (30) et le commutateur électrique change son état de commutation, génère une impulsion de commutation et la source d'air comprimé (28) met fin à la première phase opératoire (100) et démarre la seconde phase opératoire (108).
